# EUROPEAN PATENT SPECIFICATION

(11) **EP 1 412 299 B1**
(45) Date of publication and mention of the grant of the patent: **15.12.2004**
(21) Application number: 02751457.9
(22) Date of filing: 10.07.2002
(51) Int. Cl.: C03C 17/34, C04B 41/89, B44C 5/04, B41M 5/00

(54) **METHOD TO DECORATE GLASSY SURFACES WITH AN INK-JET PRINTER**
VERFAHREN ZUM DEKORIEREN VON GLASARTIGEN OBERFLÄCHEN MIT EINEM TINTENSTRAHLDRUCKER
PROCEDE PERMETTANT DE DECORER DES SURFACES DE VERRE A L'AIDE D'UNE IMPRIMANTE A JET D'ENCRE

(30) Priority: 13.07.2001 IT BO20010438
(43) Date of publication of application: 28.04.2004
(73) Proprietor: Lesepidado Srl, 40139 Bologna (IT)
(72) Inventor: SETTI, Leonardo, I-40139 Bologna (IT); GIULIANI, Silvia, I-40139 Bologna (IT)
(74) Representative: Beszédes, Stephan G., Dr.
(86) International application number: PCT/IB2002/002713
(87) International publication number: WO 2003/006394

(56) References cited:
- WO-A-98/40323
- US-A- 5 654 036
- DATABASE WPI Section Ch, Week 198823 Derwent Publications Ltd., London, GB; Class E11, AN 1988-159652 XP002222199 & SU 1 350 131 A (KHARKOV POLY), 7 November 1987 (1987-11-07)
- PATENT ABSTRACTS OF JAPAN vol. 014, no. 180 (C-0708), 11 April 1990 (1990-04-11) & JP 02 026885 A (INAX CORP), 29 January 1990 (1990-01-29)

## Description

### FIELD OF THE ART

The present invention refers to the technical field of technological processes for the print with types and decorations of different kinds. Particularly, the present invention concerns the decoration of tiles for facings or floors of ceramic or plates of glass, mirrors or other glassy surfaces.

### STATE OF THE ART

Ink jet printer connected to computers for the printing on paper of types and decorations of different kinds with different colors. Industrial plants for the production of decorated tiles are also known

Such plants require burdensome investments for the realization of operational machines and for the set up of high number of print matrixes.

The problem to be solved is the realization of an highly versatile print technological process that allows for the decoration of glassy surfaces such as tiles of similar products with the largely affordable employment of ink-jet printers managed by a personal computer.

The present inventions suggest in fact to replace the expensive and complex traditional equipment for the decoration of glassy surfaces of the tiles or of similar products.

### DESCRIPTION

The invention is now disclosed with reference to the figures of the drawings, that to be considered not restrictive examples.

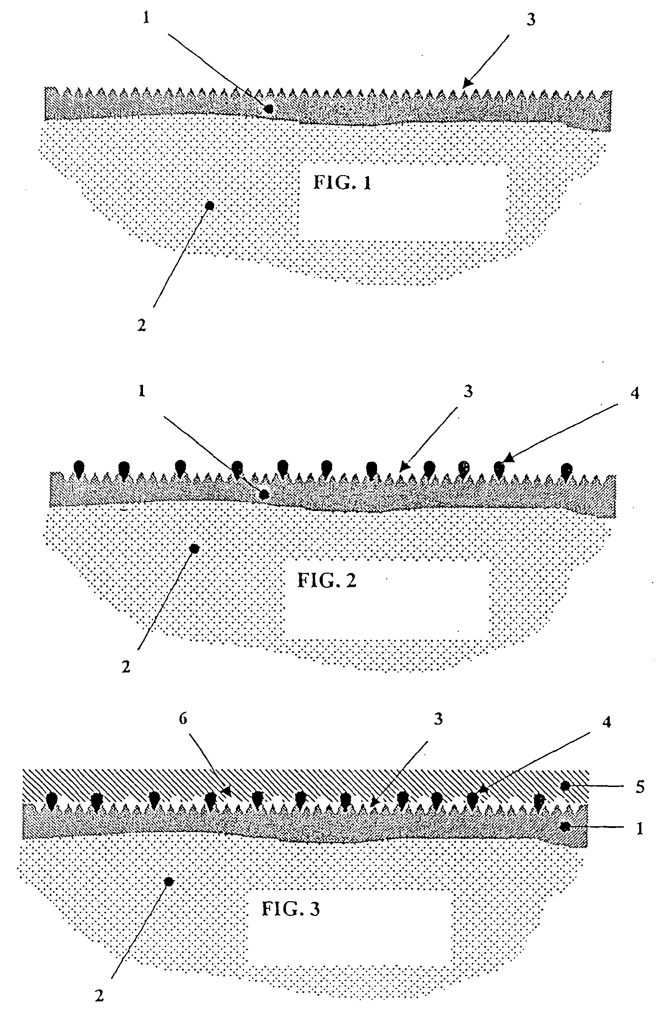

Figure 1 is a schematic representation, in partial enlarged section, of the glassy surface of a tile or of a similar product such as glass. It is pointed out the presence of chemical functional groups, uniformly distributed upon the glassy surface, that have specific reactivity. It can in fact be noticed the presence of reactive elements (3) upon the glassy surface (1).

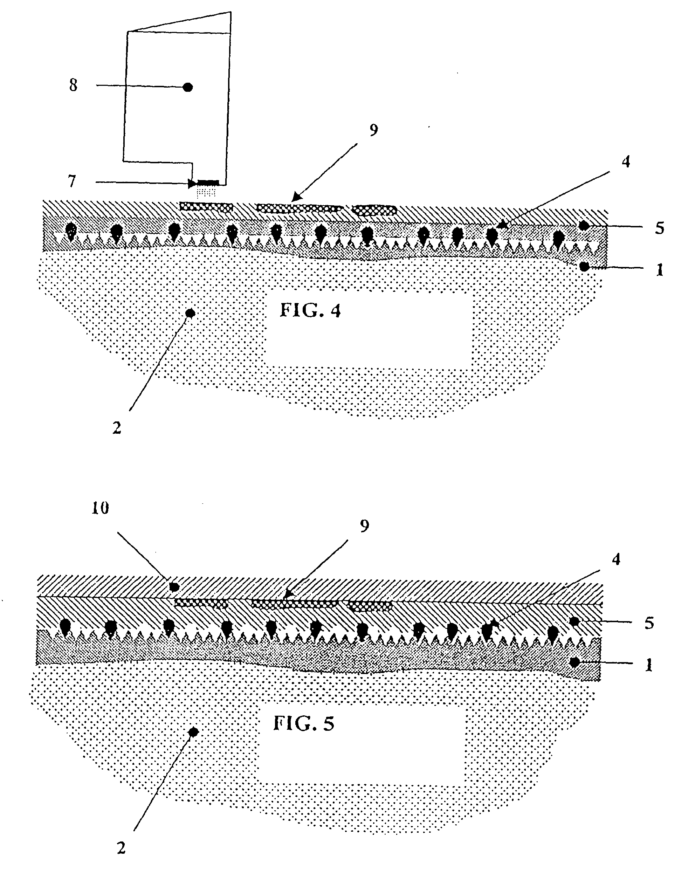

Figure 2 represents in simplified way the preliminary treatment upon the glassy surface. It can in fact be noticed that a part of the chemical functional groups, that is of the reactive elements (3), is has been derivatized through a chemical reaction or interaction obtained through the spreading upon the glassy surface of a substance containing specific molecules that are called "bridge", represented symbolically and marked with the number (4).
Figure 3 represents a further treatment of the glassy surface. It can be in fact noticed the presence of a polymeric film (5) extruded upon the pretreated glassy surface. Said polymeric film consists of substances that, on top of being able to absorb water, present also, specific chemical functional groups (6) that are able to react with "bridge" molecules (4).
Figure 4 indicates schematically the intervention of a ink-jet head (7), provided with a cartridge (8) filled with ink based on water or organic solvent. It can be noticed that the decorative element (9) is printed upon the polymeric cartridge (5), which is especially placed upon the pretreated glassy surface.
Figure 5 shows the final treatment of the already decorated glassy surface, upon which is extruded a second polymeric film (10) to protect the decoration (9) obtained with an ink-jet printer managed by a personal computer.

In the figures each single detail is marked as follows:
1 indicates a glassy surface;
2 indicates the body of a tile or of another glassy product;
3 indicates the chemical functional groups, having special reactivity, distributed uniformly on the glassy surface;
4 indicates the "bridge" molecules reacting or interacting with the functional groups (3);
5 indicates a polymeric extruded film upon the pretreated glassy surface;
6 indicates the specific chemical functional groups able to react or interact with the "bridge" molecules (4);
7 indicates a ink-jet head;
8 indicates a cartridge filled with water or organic solved based ink;
9 indicates the decoration printed with the ink-jet;
10 indicates a protective extruded film upon the surface predecorated with inkjet;

The clearness of the figures highlights the versatility of the method which is object of the present invention, that will have useful practical application in the industrial field but also at craft level to obtain affordably even single tiles with custom made decoration performed in a short time.

The method subject of the invention can be realized with ink jet printers of different kinds managed by generic computer systems.

All the methods that will be employed to realize decorations of tiles or other glassy surfaces that will feature operational sequences similar or that can be deduced by the ones described, illustrated and hereinafter claimed, will be held as being part of the protection sphere of the present invention.

## Claims

1. Method to optimize the decoration of glassy surfaces with an ink-jet printer **CHARACTERIZED BY** THE FACT it includes the preliminary treatment of the spreading, upon the glassy surface to be decorated, of a substance containing specific "bridge" molecules (4) that react or interact chemically with the specific reactive elements (3) that are present upon the glasslike surfaces.

2. Method to optimize the decoration of glassy surfaces with an ink-jet printer, as in claim 1, **CHARACTERIZED BY** THE FACT it includes, upon the pre-treated glassy surface, a polymeric film 5 consisting of substances that, on top of being able to absorb water, feature also specific chemical functional groups (6) that are able to react or interact with the "bridge" molecules (4) previously spread upon the glassy surface (1).

3. Method to optimize the decoration of glassy surfaces with an ink-jet printer, as in previous claims, **CHARACTERIZED BY** THE FACT it includes, upon the already decorated glassy surface, a polymeric film (10) that protect the decorations (9) obtained with a ink-jet printer managed by a computer.

## Patentansprüche

1. Verfahren zum Optimieren der Dekoration glasartiger Oberflächen mit einem Tintenstrahldrucker,
**dadurch gekennzeichnet, dass**
es eine Vorbehandlung des Verteilens eines Stoffes, der mit den auf den glasähnlichen Oberflächen vorhandenen spezifischen reaktiven Elementen (3) chemisch reagierende oder wechselwirkende spezifische "Brücken"-Moleküle (4) enthält, auf der glasartigen Oberfläche, die dekoriert werden soll, umfasst.

2. Verfahren zum Optimieren der Dekoration glasartiger Oberflächen mit einem Tintenstrahldrucker nach Anspruch 1,
**dadurch gekennzeichnet, dass**
es auf der vorbehandelten glasartigen Oberfläche einen Polymerfilm (5) umfasst, der aus Stoffen besteht, welche darüber hinaus, dass sie in der Lage sind, Wasser zu absorbieren, auch spezifische chemische funktionelle Gruppen (6) aufweisen, die in der Lage sind, mit den zuvor auf der glasartigen Oberfläche (1) verteilten "Brücken"-Molekülen (4) zu reagieren oder zu wechselwirken.

3. Verfahren zum Optimieren der Dekoration glasartiger Oberflächen mit einem Tintenstrahldrucker nach den vorhergehenden Ansprüchen,
**dadurch gekennzeichnet, dass**
es auf der bereits dekorierten glasartigen Oberfläche einen Polymerfilm (10) umfasst, der die mit einem von einem computergesteuerten Tintenstrahldrucker erhaltenen Dekorationen (9) schützt.

## Revendications

1. Procédé pour optimiser la décoration de surfaces de verre avec une imprimante à jet d'encre,
**caractérisé en ce**
**qu'**il inclut le traitement préliminaire de l'étalement, sur la surface de verre à décorer, d'une substance contenant des molécules spécifiques « formant pont » (4) qui réagissent ou interagissent chimiquement avec les éléments réactifs spécifiques (3) qui sont présents sur les surfaces ressemblant à du verre.

2. Procédé pour optimiser la décoration de surfaces de verre avec une imprimante à jet d'encre selon la revendication 1,
**caractérisé en ce**
**qu'**il inclut, sur la surface de verre pré-traitée, un film polymérique (5) composé de substances qui, en plus d'être capables d'absorber l'eau, présentent également des groupes fonctionnels chimiques spécifiques (6) qui sont capables de réagir ou d'interagir avec les molécules « formant pont » (4) étalées préalablement sur la surface de verre (1).

3. Procédé pour optimiser la décoration de surfaces de verre avec une imprimante à jet d'encre selon l'une quelconque des revendications précédentes,
**caractérisé en ce**
**qu'**il inclut, sur la surface de verre déjà décorée, un film polymérique (10) qui protège les décorations (9) obtenues avec une imprimante à jet d'encre gérée par un ordinateur.
